# EUROPEAN PATENT APPLICATION

(11) **EP 2 355 615 A1**
(43) Date of publication of application: **10.08.2011**
(21) Application number: 10305136.3
(22) Date of filing: 10.02.2010
(51) Int. Cl.: H05B 3/56

(54) **Floor heating device**

(71) Applicant: Nexans, 75008 Paris (FR)
(72) Inventor: Jonli, Odd Magne, 1406 Ski (NO)
(74) Representative: Lenne, Laurence

(57) **Abstract**

The invention concerns a floor heating device comprising a cable comprising a heating cable (2) comprising a single insulated conductor (5) and two cold conductors (12) connected to the ends of said heating cable, said cable being disposed in a meandering way and, the end regions (3, 4) of the cable being connected to the building wiring system.

According to the invention, said cable is bent at its middle in a loop (2C) in order to form two portions (2A, 2B) of cable which are disposed with a distance smaller than 10 mm in said meandering way.

## Description

The invention concerns a floor heating device.

The patent document DE 1 250 026 discloses a heating cable, said single conductor cable. Pieces of electrical resistance conductors are soldered or welded to pieces of copper conductors so as to produce a continuous length of a heating cable conductor. The continuous length is provided with a continuous insulating layer and other protective layers and sheaths.

Generally, both ends of single conductor heating cables must be connected to the house wiring system. Single conductor heating cables generate electromagnetic fields, which present problem relating to environmental and health considerations.

The patent document EP 1 675 434 discloses a heating cable, which comprises a first insulted conductor and a second insulated conductor, which are located in a common sheath. Such cable is said twin conductor cable.

One of the end regions of the heating cable is provided with a specific joint which interconnect electrically the two conductors. Such cable can be laid in a meandering way and then embedded in concrete as is well known in the field of floor heating. The other free end region of the heating cable is connected to a thermostat, connecting the both conductors to the house wiring system.

The production of such heating cable is complex and cost expensive.

The object of the invention is to provide a floor heating device, which generate acceptably small electromagnetic fields and which can be produced in an easy way.

By means of the invention, the building height of the cable as well as of the end joint and the splice between hot and cold parts of the cable is kept at a minimum, typically below 3 mm.

The invention proposes a floor heating device comprising a cable comprising a heating cable comprising a single insulated conductor and two cold conductors connected to the ends of said heating cable, said cable being disposed in a meandering way and, the end regions of the cable being connected to the building wiring system, characterized in that said cable is bent at its middle in a loop in order to form two portions of cable which are disposed with a distance smaller than 10 mm in said meandering way.

The heating device according to the invention increases safety level, because it does not comprises manual splice or manual end seal which is known to give weak points and where water can penetrate, specially when it is used in wet rooms, like bathrooms.

By placing the two portions of cable close together, the electromagnetic field is at a low level and comparable to a twin conductor cable.

Preferably, said two portions are disposed with a distance smaller than 5 mm.

According to a preferred embodiment, said cable is attached on a substrate forming a heating mat.

The two portions of cable can be fixed close together by means of an adhesive, by melting or by means of mechanical clips.

According to a first preferred variant, said cable comprises an integrated splice with a cold conductor close to said end regions.

According to a second preferred variant, said cable comprises an integrated splice with one cold conductor close to said loop.

The heating device according to the invention has the advantage to present a small height too, for example a height comprised between 3 and 3,5 mm. This property limits the amount of screed or mortar necessary to cover the heating device. The integrated splice does not increase this height. There is thus no need to excavate extra space in the floor for the splicing and/or the end joint.

Advantageously, said cable comprises around the single conductor, an insulating layer, a metal screen and a protective jacket.

In other embodiment, said cable comprises the single conductor covered by an insulating layer and an earth potential wire into an protective jacket.

Preferred embodiments of the invention will be now described in connection with drawings in which:
Figure 1 is a top view of a floor heating device according to the invention.
Figures 2A and 2B are detailed views of figure 1.
Figures 3A to 3D are examples of transversal sectional views of a heating cable according to the invention.
Figure 4 is a longitudinal sectional view of a heating cable according to the invention.
Figure 5A is a top developed view of a floor heating device according to a first preferred variant of the invention.
Figure 5B is a front developed view of a floor heating device according to a second preferred variant of the invention.

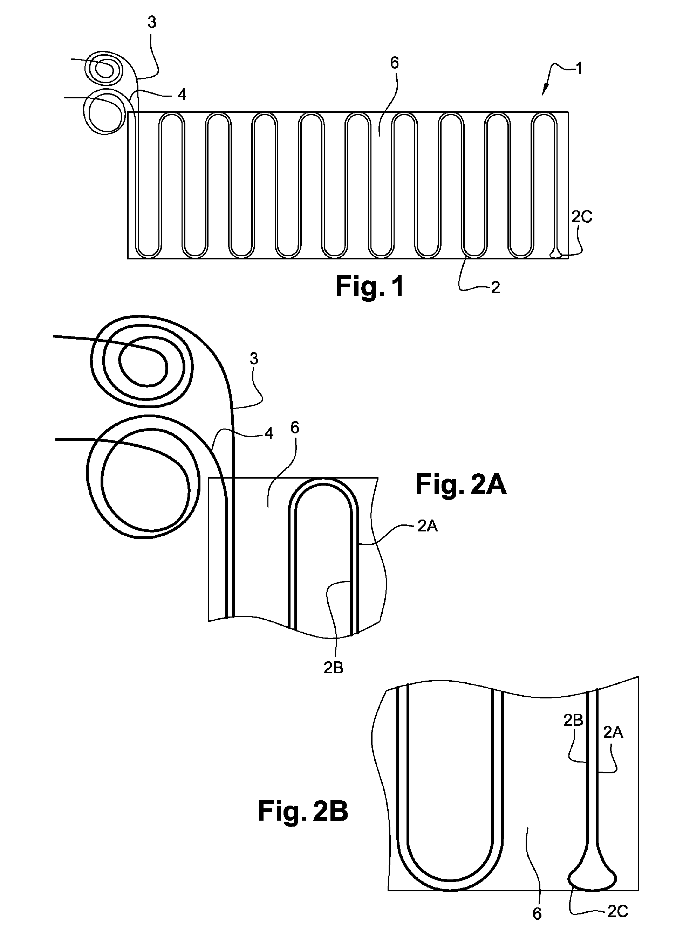

As presented in figures 1 and 2, the floor heating device 1 according to the invention comprises a cable disposed in a meandering way and comprising a heating cable 2 comprising a single insulated conductor 5, the end regions 3, 4 of the cable being connected to the building wiring system.

The cable 2 is bent at its middle in a loop 2C in order to form two portions of cable 2A, 2B which are disposed close together, with a distance smaller than 10 mm, preferably smaller that 5 mm, in said meandering way.

The cable 2 is attached on a substrate 6, preferably a net or a scrim forming a heating mat.

The heating device can be installed without supporting substrate. In that case, the two portions of the cable 2A, 2B can be kept close together by bonding between the two portions of cable 2A, 2B, or between each of the two portions and the floor, for example by means of an adhesive, by melting together the outer jackets of the cables or by using mechanical fixing clips.

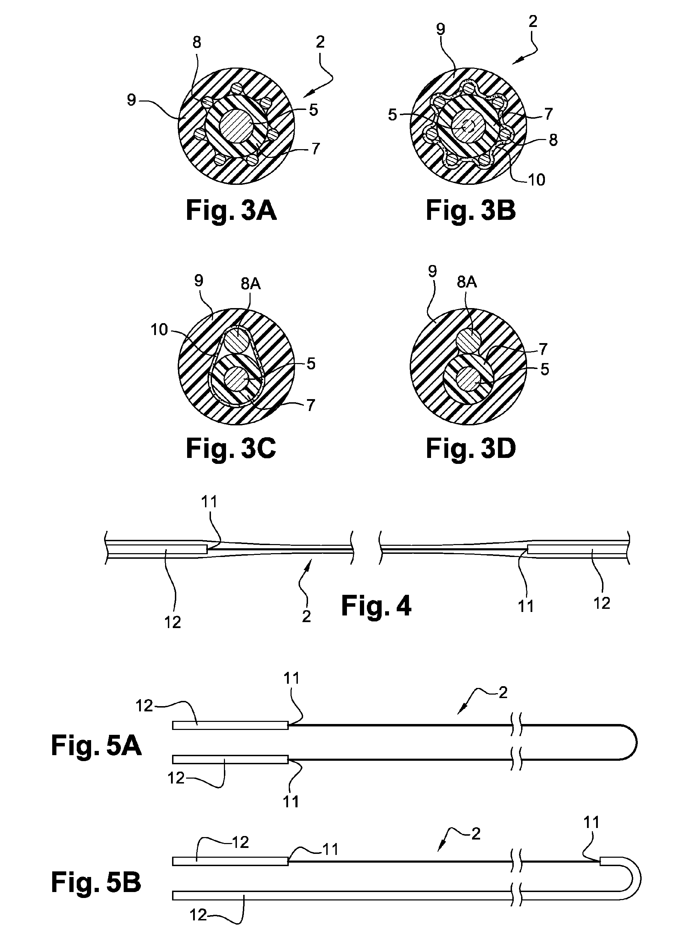

As represented in figures 3A and 3B, the heating cable comprises around the single conductor 5, an insulating layer 7, for example made of fluorpolymer, a metal screen or earth potential layer 8, preferably constituted by metal wires, and an protective jacket 9, for example made of PVC, polyolefins or TPE.

For example, the conductor 5 has a diameter of about 0,8 mm, the insulating layer 7 has a thickness of about 0,3 mm and the protective jacket has a thickness of at least 0,3 mm.

Optionally, as illustrated in figure 3B, the cable 2 can comprise a laminate of metal and polymer 10 between the metal screen 8 and the protective jacket 9.

In an other embodiment, presented in figure 3C and 3D, the earth potential layer can be replaced by an earth potential wire 8A which is placed close to the conductor 5 covered by the insulating layer 7. The other elements of this embodiment with the same references are unchanged.

Optionally, as illustrated in figure 3D, the cable 2 can comprise a protective jacket 9 made of a conductive polymer, for example conductive PVC.

As illustrated in figure 4, the cable comprises integrated splices 11, encapsulated by common insulating layers and metal sheath, with cold conductors 12 close its said end regions, in order to connect the end regions of the cable being to the building wiring system.

Figure 5A is a front developed view of a floor heating device according to a first preferred variant of the invention where the two integrated splices 11 are at the same end of the heating device.

In this case, the heating cable 2 comprises an integrated splice 11 with said cold conductors 12 close to the end regions 3, 4.

Figure 5B is a front developed view of a floor heating device according to a second preferred variant of the invention where the two splices 11 are placed on each end of the heating device.

In this second case, the heating cable 2 comprises an integrated splice 11 with one cold conductor 12 close to said loop.

## Claims

1. Floor heating device comprising a cable comprising a heating cable (2) comprising a single insulated conductor (5) and two cold conductors (12) connected to the ends of said heating cable, said cable being disposed in a meandering way and, the end regions (3, 4) of the cable being connected to the building wiring system, **characterized in that** said cable is bent at its middle in a loop (2C) in order to form two portions (2A, 2B) of cable which are disposed with a distance smaller than 10 mm in said meandering way.

2. Floor heating device according to claim 1, **characterized in that** said two portions are disposed with a distance smaller than 5 mm.

3. Floor heating device according to claim 1 or 2, **characterized in that** said cable is attached on a substrate (6) forming a heating mat.

4. Floor heating device according to claim 1 or 2, **characterized in that** the two portions of cable are fixed close together by means of an adhesive or by melting.

5. Floor heating device according to claim 1 or 2, **characterized in that** the two portions of cable are fixed close together by means of mechanical clips.

6. Floor heating device according to one of preceding claims, **characterized in that** said cable comprises an integrated splice (11) with said cold conductors (12) close to said end regions.

7. Floor heating device according to one of claims 1 to 5, **characterized in that** said cable comprises an integrated splice (11) with one cold conductor (12) close to said loop.

8. Floor heating device according to one of preceding claims, **characterized in that** said cable (2) comprises around the single conductor (5), an insulating layer (7), a metal screen (8) and a protective jacket (9).

9. Floor heating device according to one of claims 1 to 5, **characterized in that** said cable (2) comprises the single conductor (5) covered by an insulating layer (7) and earth potential wire (8A) into a protective jacket (9).
